# EUROPEAN PATENT APPLICATION

(11) **EP 4 693 533 A1**
(43) Date of publication of application: **11.02.2026**
(21) Application number: 24779111.4
(22) Date of filing: 04.03.2024
(51) Int. Cl.: H01M 8/04014, H01M 8/04, H01M 8/12, H01M 8/14, H01M 8/0612, H01M 8/04537, H01M 8/04858

(54) **POWER GENERATION SYSTEM AND POWER GENERATION METHOD**

(30) Priority: 31.03.2023 JP 2023058533
(71) Applicant: ENEOS CORPORATION, Chiyoda-ku Tokyo 100-8162 (JP)
(72) Inventor: TAKAHASHI, Yuriko, Tokyo 100-8162 (JP); HIRANO, Yuichiro, Tokyo 100-8162 (JP); KUBO, Koichi, Tokyo 100-8162 (JP)
(74) Representative: Algemeen Octrooi- en Merkenbureau B.V.
(86) International application number: PCT/JP2024/008036
(87) International publication number: WO 2024/202973

(57) **Abstract**

This power generation system 1 comprises: a dehydrogenation reaction unit 2 that generates hydrogen and a dehydrogenation product from an organic hydride; a first hydrogen purification unit 4 that separates a first gas component G1 and a second gas component G2 from effluent E of the dehydrogenation reaction unit 2; a fuel cell 6 that receives supply of the first gas component G1 and generates power; a recycling line RL that supplies the second gas component G2 to the dehydrogenation reaction unit 2; a combustion unit 8 that burns offgas OG of the fuel cell 6 and generates combustion gas CG; a first heating unit 10 that heats the dehydrogenation reaction unit 2 using the combustion gas CG; and a second heating unit 12 that heats the organic hydride using the combustion gas CG. In a flow path of the combustion gas CG, the second heating unit 12 is positioned on the downstream side of the first heating unit 10.

## Description

### TECHNICAL FIELD

The present invention relates to a power generation system and a power generation method.

### BACKGROUND ART

A power generation system is known that extracts hydrogen from organic hydrides such as hydrogenated aromatic compounds by dehydrogenation reaction and introduces the resulting hydrogen into a power generation device to generate electricity (e.g., see Patent Literature 1). In this power generation system, at least a portion of the heat required for the dehydrogenation reaction is provided by the heat from the exhaust gas of the power generation device.

### RELATED-ART LITERATURE

### PATENT LITERATURE

Patent Literature 1: JP 2012-206909

### SUMMARY OF INVENTION

### TECHNICAL PROBLEM

The present inventors have made a series of intensive studies and come up with a new technology for further improving power generation efficiency in a power generation system in which hydrogen production using organic hydrides and power generation using hydrogen are combined.

The present invention has been made in view of such a situation, and an object thereof is to improve power generation efficiency in a power generation system in which hydrogen production using organic hydrides and power generation using hydrogen are combined.

### SOLUTION TO PROBLEM

One embodiment of the present invention relates to a power generation system. This system includes: a dehydrogenation reaction unit that produces hydrogen and a dehydrogenation product from an organic hydride; a first hydrogen purification unit that separates at least a first gas component and a second gas component from an effluent from the dehydrogenation reaction unit, the first gas component containing the hydrogen in a larger amount than that in the second gas component and the second gas component containing the gaseous dehydrogenation product and the gaseous organic hydride in a larger amount than those in the first gas component; a fuel cell that receives supply of the first gas component so as to generate electricity; a recycle line that supplies the second gas component to the dehydrogenation reaction unit; a combustion unit that combusts an off-gas from the fuel cell so as to generate a combustion gas; a first heating unit that heats the dehydrogenation reaction unit using the combustion gas; and a second heating unit that heats the organic hydride supplied to the dehydrogenation reaction unit using the combustion gas, wherein the second heating unit is located on the downstream side of the first heating unit in a flow path of the combustion gas.

Another embodiment of the present invention relates to a power generation method. This method includes: producing hydrogen and a dehydrogenation product from an organic hydride; separating at least a first gas component and a second gas component from an effluent in the producing hydrogen and a dehydrogenation product, the first gas component containing the hydrogen in a larger amount than that in the second gas component and the second gas component containing the gaseous dehydrogenation product and the gaseous organic hydride in a larger amount than those in the first gas component; supplying the first gas component to a fuel cell so as to generate electricity in the fuel cell; supplying the second gas component to the producing hydrogen and a dehydrogenation product; combusting an off-gas from the fuel cell so as to generate a combustion gas; supplying heat of the combustion gas to the producing hydrogen and a dehydrogenation product; and heating the organic hydride supplied to the producing hydrogen and a dehydrogenation product using the combustion gas obtained after being used in the supplying heat of the combustion gas.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present invention, it is possible to improve power generation efficiency in a power generation system in which hydrogen production using organic hydrides and power generation using hydrogen are combined.

### BRIEF DESCRIPTION OF DRAWINGS

[Fig. 1] Fig. 1 is a schematic diagram of a power generation system according to an embodiment.
[Fig. 2] Fig. 2 is a diagram showing the relationship between a residual ratio and the relative value of power generation efficiency.

### DESCRIPTION OF EMBODIMENTS

Hereinafter, the present invention will be described based on preferred embodiments with reference to the drawings. The embodiments do not limit the technical scope of the present invention and are shown for illustrative purposes, and not all the features described in the embodiments and combinations thereof are necessarily essential to the invention. Therefore, regarding the details of the embodiments, many design modifications such as change, addition, deletion, etc., of the constituent elements may be made without departing from the spirit of the invention defined in the claims. New embodiments resulting from added design change will provide the advantages of the embodiments and variations that are combined. In the embodiments, the details for which such design change is possible are emphasized with the notations "according to the present embodiment," "in the present embodiment," etc. However, design change is also allowed for those without such notations. Optional combinations of the constituting elements described in the embodiments are also valid as embodiments of the present invention. The same or equivalent constituting elements, members, and processes illustrated in each drawing shall be denoted by the same reference numerals, and duplicative explanations will be omitted appropriately. The scales and shapes of parts shown in each figure are set for the sake of convenience in order to facilitate the explanation and shall not be interpreted in a limited manner unless otherwise mentioned. Terms like "first," "second," etc., used in the specification and claims do not indicate an order or importance by any means and are used to distinguish a certain feature from the others. Some of the components in each figure may be omitted if they are not important for explanation.

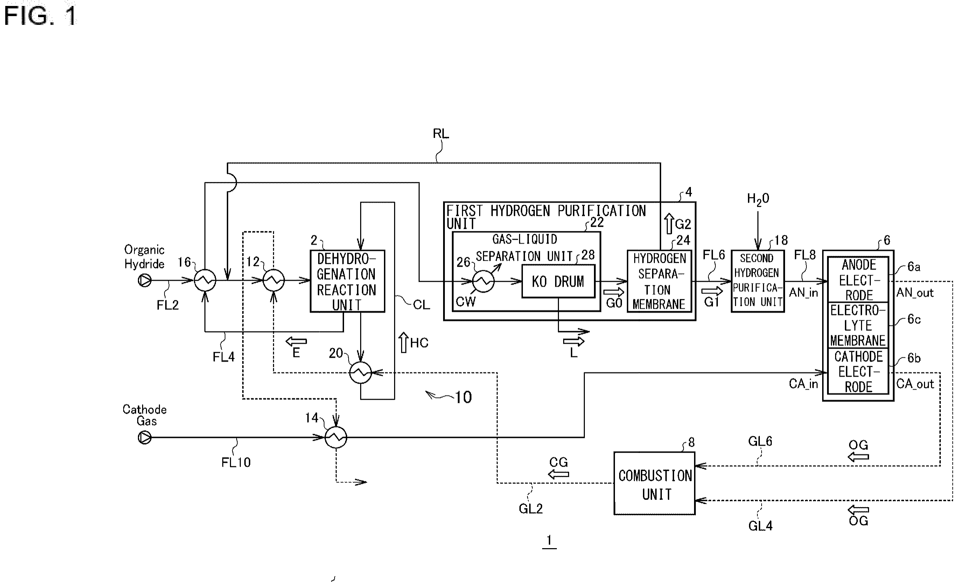

Fig. 1 is a schematic diagram of a power generation system 1 according to an embodiment. The power generation system 1 includes a dehydrogenation reaction unit 2, a first hydrogen purification unit 4, a fuel cell 6, a recycle line RL, a combustion unit 8, a first heating unit 10, a second heating unit 12, a third heating unit 14, a fourth heating unit 16, and a second hydrogen purification unit 18.

The dehydrogenation reaction unit 2 dehydrogenates an organic hydride to produce hydrogen and a dehydrogenated product (in other words, hydrogenation target substance). The dehydrogenation reaction unit 2 can remove hydrogen from an organic hydride by a dehydrogenation reaction using a well-known dehydrogenation catalyst such as platinum, palladium, or nickel. Organic hydrides become dehydrogenation products when hydrogen is removed. The dehydrogenation catalyst may be carried on a support such as alumina, silica, titania, or the like.

A feedline FL2 is connected to the dehydrogenation reaction unit 2, and the organic hydride is supplied to the dehydrogenation reaction unit 2 from the outside through the feedline FL2. Organic hydrides are manufactured, for example, using a known organic hydride production device (not shown). An example of the organic hydride production device includes a cathode electrode, an anode electrode, and an electrolyte membrane separating the two electrodes. In the anode electrode, water or hydroxide ions are oxidized. In the cathode electrode, a dehydrogenation product is electrochemically reduced to produce an organic hydride. The generated organic hydrides are stored in a known tank installed at the place of manufacture (not shown) and transported from the tank to the place of consumption. The organic hydrides are then stored in a tank installed at the consumption site (not shown) and sent from the tank to the feedline FL2.

The organic hydride production device receives the electric power required for the electrolytic reduction of the dehydrogenation product from the power supply device (not shown). Examples of the power supply device include a power generation device that generates electricity using renewable energy, such as a wind power generation device or a solar power generation device. This reduces the emission amount of carbon dioxide associated with the production of organic hydrides. The power supply device is not limited to a power generation device using renewable energy, and may be a system power supply, a power storage device storing electric power from the power generation device using renewable energy or the system power supply, or the like. A combination of two or more of these devices may be used.

The dehydrogenation product and organic hydride used in the present embodiment are not particularly limited as long as they are organic compounds that allow for addition/desorption of hydrogen when hydrogenation/dehydrogenation reactions are caused reversibly, and a wide range of compounds such as acetone-isopropanol, benzoquinone-hydroquinone, and aromatic hydrocarbons can be used. Among these, those of an aromatic hydrocarbon type are preferable from the viewpoint of transportability during energy transport or the like.

An aromatic hydrocarbon compound used as the dehydrogenation product is a compound that contains at least one aromatic ring, and examples thereof include benzene, alkylbenzene, naphthalene, alkylnaphthalene, anthracene, diphenylethane, and the like. The alkylbenzene contains a compound in which one to four hydrogen atoms in the aromatic ring are substituted with a linear alkyl group or a branched alkyl group having one to six carbons. Examples of such a compound include toluene, xylene, mesitylene, ethylbenzene, diethylbenzene, and the like. The alkylnaphthalene contains a compound in which one to four hydrogen atoms in the aromatic ring are substituted with a linear alkyl group or a branched alkyl group having one to six carbons. Examples of such a compound include methylnaphthalene. These compounds may be used alone or in combination.

The dehydrogenation product is preferably at least one of toluene, benzene, and xylene. It is also possible to use a nitrogen-containing heterocyclic aromatic compound such as pyridine, pyrimidine, pyrazine, quinoline, isoquinoline, N-alkylpyrrole, N-alkylindole, or N-alkyldibenzopyrrole as the dehydrogenation product. The organic hydride is obtained by hydrogenating the above-described dehydrogenation product, and examples thereof include cyclohexane, methylcyclohexane, dimethylcyclohexane, piperidine, and the like.

The dehydrogenation reaction of an organic hydride is an endothermic reaction. Therefore, the dehydrogenation reaction unit 2 and the organic hydride supplied to the dehydrogenation reaction unit 2 are preferably at high temperatures. Therefore, in the present embodiment, the fourth heating unit 16 and the second heating unit 12 are connected in the middle of the feedline FL2, and the organic hydride is preheated upstream of the dehydrogenation reaction unit 2. For the fourth heating unit 16 and the second heating unit 12, a known heat exchanger can be used. The fourth heating unit 16 is located upstream of the second heating unit 12 in the flow of the organic hydride.

A feedline FL4 through which an effluent E from the dehydrogenation reaction unit 2 flows is connected to the fourth heating unit 16. The organic hydride flowing through the feedline FL2 is heated by heat exchange with the effluent E (e.g., 250°C to 400°C) flowing through the feedline FL4 in the fourth heating unit 16 (e.g., heated to 120°C to 250°C). Due to the heating in the fourth heating unit 16, the organic hydride evaporates into a gas. Preheating the organic hydride with the heat of the effluent E can increase the efficiency of heat utilization in the power generation system 1. Therefore, it is possible to improve the power generation efficiency in the power generation system 1.

The organic hydride that has evaporated in the fourth heating unit 16 proceeds to the second heating unit 12. A gas line GL2, which is a flow path through which a combustion gas CG from the combustion unit 8 flows, is connected to the second heating unit 12. The organic hydride that has reached the second heating unit 12 is further heated by heat exchange with the combustion gas CG (e.g., 300°C to 500°C) flowing through the gas line GL2 in the second heating unit 12 (e.g., heated to 250°C to 400°C). This allows the heated organic hydride to be supplied to the dehydrogenation reaction unit 2. Preheating the organic hydride with the heat of the combustion gas CG can increase the efficiency of heat utilization in the power generation system 1. Therefore, it is possible to improve the power generation efficiency in the power generation system 1. The second heating unit 12 is arranged downstream of the first heating unit 10 in the gas line GL2 in the flow of the combustion gas CG. Therefore, the second heating unit 12 heats the organic hydride using the combustion gas CG that has been used in the first heating unit 10.

Further, the dehydrogenation reaction unit 2 is heated by the first heating unit 10. The first heating unit 10 heats the dehydrogenation reaction unit 2 using the combustion gas CG from the combustion unit 8. This allows for an increase in the efficiency of heat utilization in the power generation system 1 and an improvement in the power generation efficiency in power generation system 1.

As an example, the first heating unit 10 heats the dehydrogenation reaction unit 2 using a heat medium HC. As the heat medium HC, known substances such as dibenzyl toluene, silicon oil, or the like can be used. The first heating unit 10 has a heat exchanger 20 and a heat medium line CL. For the heat exchanger 20, a known heat exchanger can be used. The gas line GL2 and the heat medium line CL are connected to the heat exchanger 20. The heat medium line CL is also connected to the dehydrogenation reaction unit 2 to circulate the heat medium HC between the heat exchanger 20 and the dehydrogenation reaction unit 2.

The heat medium HC flowing through the heat medium line CL exchanges heat with the combustion gas CG (e.g. 750°C to 1000°C) flowing through the gas line GL2 in the heat exchanger 20 and is heated upon receiving heat supply from the combustion gas CG (e.g., heated to 300°C to 400°C). The heated heat medium HC flows through the heat medium line CL to reach the dehydrogenation reaction unit 2. The dehydrogenation reaction unit 2 includes a mechanism that is heat exchangeable with the heat medium HC flowing through the heat medium line CL and receives heat supply from the heat medium HC. As a result of the supply of the heated organic hydride, the heating of the dehydrogenation reaction unit 2 by the first heating unit 10, and the like, the temperature of the reaction field of the dehydrogenation reaction unit 2 becomes 300°C to 400°C, for example.

Direct heating of the dehydrogenation reaction unit 2 with the combustion gas CG can result in coking (i.e., deposition of solid carbon on the catalyst) caused by the dehydrogenation product and the organic hydride, the decomposition of the dehydrogenation product and the organic hydride, and the like. On the other hand, when the heat of the combustion gas CG is supplied to the dehydrogenation reaction unit 2 through the heat medium HC, the amount of heat supplied to the dehydrogenation reaction unit 2 and the temperature of the dehydrogenation reaction unit 2 can be adjusted by the heat medium HC. This can suppress the occurrence of catalyst degradation, decomposition, and the like caused due to sintering and coking. Therefore, it is possible to suppress the deterioration of the dehydrogenation reaction unit 2 and the decline in the utilization rate of the organic hydride, thus improving the power generation efficiency of the power generation system 1. The dehydrogenation reaction unit 2 may be heated directly with the combustion gas CG without using the heat medium HC. In this case, the structure of the power generation system 1 can be simplified.

The dehydrogenation reaction unit 2 is connected to the first hydrogen purification unit 4 by the feedline FL4. The effluent E from the dehydrogenation reaction unit 2 is sent to the first hydrogen purification unit 4 through the feedline FL4. The effluent E may contain unreacted organic hydrides in addition to hydrogen and dehydrogenation products. The first hydrogen purification unit 4 separates at least a first gas component G1 and a second gas component G2 from the effluent E from the dehydrogenation reaction unit 2. The first gas component G1 contains the hydrogen in a larger amount than that in the second gas component G2. The second gas component G2 contains the gaseous dehydrogenation product and the gaseous organic hydride in a larger amount than those in the first gas component G1.

The first gas component G1 desirably does not contain dehydrogenation products or organic hydrides. However, in reality, the first gas component G1 tends to contain a small amount of at least one of the dehydrogenated products and the organic hydrides. Desirably, the second gas component G2 does not contain hydrogen. However, in reality, the second gas component G2 tends to contain a small amount of hydrogen. Therefore, the first gas component G1 can be interpreted to represent high-purity hydrogen and the second gas component G2 as low-purity hydrogen.

As an example, the first hydrogen purification unit 4 has a gas-liquid separation unit 22 and a hydrogen separation membrane 24. The gas-liquid separation unit 22 is located upstream of the hydrogen separation membrane 24 in the flow of the effluent E. The gas-liquid separation unit 22 separates a liquid component L and a gas component G0 from the effluent E from the dehydrogenation reaction unit 2. The liquid component L contains liquid dehydrogenation products and liquid organic hydrides in a larger amount than those in the gas component G0. The gas component G0 contains first gas components G1 and second gas components G2 in a larger amount than those in the liquid component L. Desirably, the liquid component L does not contain first gas components G1 or second gas components G2 but may contain a trace amount of these gas components. The gas component G0 desirably does not contain liquid dehydrogenation products or liquid organic hydrides but may contain a trace amount of these liquid components.

As an example, the gas-liquid separation unit 22 has a cooler 26 and a knockout drum 28. The knockout drum 28 is located downstream of the cooler 26. The cooler 26 is connected to the feedline FL4. The effluent E flowing through the feedline FL4 is cooled by heat exchange with cooling water CW (e.g., 5°C to 50°C) in the cooler 26 (e.g., cooled to 5°C to 50°C). This causes the dehydrogenation products and organic hydrides contained in the effluent E to become liquid. For the cooler 26, a known heat exchanger can be used.

The effluent E cooled by the cooler 26 is sent to the knockout drum 28. The knockout drum 28 separates the liquid component L and the gas component G0 from the effluent E. For the knockout drum 28, a known knockout drum can be used. The separated liquid component L is discharged out of the system. The liquid component L may be reused in the dehydrogenation reaction unit 2 or in the organic hydride production device. This can increase the utilization rate of the organic hydrides.

The gas component G0 separated by the knockout drum 28 is sent to the hydrogen separation membrane 24. The hydrogen separation membrane 24 separates the first gas component G1 and the second gas component G2 from the gas component G0. For the hydrogen separation membrane 24, a silica membrane, a zeolite membrane, a polymer membrane, a carbon membrane, a palladium membrane, etc., that are known can be used. A compressor that boosts the gas component G0 may be provided between the knockout drum 28 and the hydrogen separation membrane 24. By pressurizing the gas component G0, gas separation in the hydrogen separation membrane 24 can be promoted.

The first hydrogen purification unit 4 may have a TSA separation unit instead of the hydrogen separation membrane 24. The TSA separation unit separates the first gas component G1 and the second gas component G2 from the gas component G0 using the temperature swing adsorption method (TSA method). For the TSA separation unit, a known separation unit can be used. As an example, the TSA separation unit includes an adsorbent that adsorbs dehydrogenated products and organic hydrides contained in the gas component G0 at room temperature and that desorbs adsorbed dehydrogenation products and organic hydrides at high temperatures. When the TSA separation unit is used, the combustion gas CG from the combustion unit 8 may be used to regenerate the adsorbent.

The structure of the first hydrogen purification unit 4 is not limited to the one described above. For example, changes such as omitting the gas-liquid separation unit 22 may be possible in accordance with the purity of hydrogen required for the fuel cell 6, the performance of the separation membrane and adsorbent that are used, etc. Other separation techniques such as distillation, pressure swing adsorption method (PSA method), and cryogenic separation may also be used. Further, an adsorption separation unit that uses adsorption principles other than TSA and PSA methods may be adopted. Such an adsorption separation unit includes a separation unit that only performs adsorption without regenerating the adsorbent. Further, multiple first hydrogen purification units 4 may be provided in series or parallel to one another.

A recycle line RL is connected to the first hydrogen purification unit 4. The recycle line RL supplies the second gas component G2 separated by the hydrogen separation membrane 24 to the dehydrogenation reaction unit 2. As an example, one end of the recycle line RL is connected to the hydrogen separation membrane 24 and the other end thereof is connected between the fourth heating unit 16 and the second heating unit 12 in the feedline FL2. The second gas component G2 separated by the hydrogen separation membrane 24 is returned to the feedline FL2 through the recycle line RL. The second gas component G2 returned to the feedline FL2 is heated in the second heating unit 12 and then fed to the dehydrogenation reaction unit 2, where the organic hydrides in the second gas component G2 are used for hydrogen production. This can improve the utilization rate of the organic hydrides. Thus, the power generation efficiency in the power generation system 1 can be improved.

The first hydrogen purification unit 4 is connected to the second hydrogen purification unit 18 by the feedline FL6. The first gas component G1 separated by the hydrogen separation membrane 24 is sent through the feedline FL6 to the second hydrogen purification unit 18. The second hydrogen purification unit 18 is located upstream of the fuel cell 6 and performs hydrogenolysis or steam reforming on at least one of the dehydrogenation product and organic hydride contained in the first gas component G1. As a result, the dehydrogenation product and the organic hydride are converted into methane, hydrogen, etc.

When the second hydrogen purification unit 18 performs hydrogenolysis on the dehydrogenation product and the like, a known hydrogenation unit can be used for the second hydrogen purification unit 18. The hydrogen required for hydrogenolysis can be provided by the hydrogen in the first gas component G1. When the second hydrogen purification unit 18 performs steam reforming on the dehydrogenation product and the like, a known reformer can be used for the second hydrogen purification unit 18. The reformer constituting the second hydrogen purification unit 18 may be provided integrally with the fuel cell 6. For example, the power generation system 1 may include a reformer-integrated fuel cell 6 filled with a reforming catalyst. The water (preferably water vapor) required for steam reforming is supplied, for example, from an external source. The water can also be provided by water or steam produced in the fuel cell 6 or the combustion unit 8. The second hydrogen purification unit 18 may perform both hydrogenolysis and steam reforming.

Instead of the second hydrogen purification unit 18, the power generation system 1 may include an adding unit that adds water to the first gas component G1 upstream of the fuel cell 6. As an example, the adding unit adds externally supplied water (preferably water vapor) to the first gas component G1. By adding water to the first gas component G1, the steam reforming reaction of the dehydrogenation product and the like caused by the anode catalyst can be promoted at the anode electrode 6a of the fuel cell 6. In other words, the fuel cell 6 can also function as the second hydrogen purification unit 18.

The second hydrogen purification unit 18 is connected to the fuel cell 6 by a feedline FL8. The first gas component G1 sent from the second hydrogen purification unit 18 is fed to the fuel cell 6 through the feedline FL8.

In the first gas component G1, the content of dehydrogenation products and organic hydrides is reduced by the first hydrogen purification unit 4. In the first gas component G1, the content of dehydrogenation products and the like is further reduced by the second hydrogen purification unit 18. Alternatively, the dehydrogenation products and the like are reformed in the fuel cell 6 by the addition of water to the first gas component G1 by the adding unit. Thereby, the occurrence of coking caused by dehydrogenation products and the like can be suppressed and the degradation of the fuel cell 6 can be suppressed. Further, the amount of fuel supplied to the fuel cell 6 can be increased by decomposition and reforming of dehydrogenation products and the like. Thus, the power generation efficiency in the power generation system 1 can be improved.

The fuel cell 6 receives the supply of the first gas component G1 and generates electricity using hydrogen in the first gas component G1. The operating temperature of the fuel cell 6 is high, e.g., 600°C to 800°C. Preferred examples of the fuel cell 6 include known solid oxide fuel cells (SOFC) and molten carbonate fuel cells (MCFC). By using the fuel cell 6 with a high operating temperature, the heat from the fuel cell 6 can be more easily used for the dehydrogenation reaction in the dehydrogenation reaction unit 2. Further, by using these fuel cells 6, the Joule heat generated during power generation can be also used in addition to the heat of combustion of an off-gas. Furthermore, these fuel cells 6 can use light hydrocarbons such as carbon monoxide and methane as well as hydrogen as fuel. Thus, it is easier to improve the power generation efficiency in the power generation system 1.

As an example, the fuel cell 6 has an anode electrode 6a, a cathode electrode 6b, and an electrolyte membrane 6c separating the anode electrode 6a and the cathode electrode 6b. The feedline FL8 is connected to the inlet of the anode electrode 6a, and a first gas component G1 containing hydrogen is supplied. A feedline FL10 is connected to the inlet of cathode electrode 6b, and cathode gas containing oxygen is supplied from the outside. Air or the like can be used as the cathode gas. At the cathode electrode 6b, oxygen reacts with electrons to produce oxygen ions. The oxygen ions move through the electrolyte membrane 6c to the anode electrode 6a. At the anode electrode 6a, hydrogen reacts with the oxygen ions to produce water and electrons.

In the middle of the feedline FL10, the third heating unit 14 is connected. The gas line GL2 is connected to the third heating unit 14. The cathode gas that has reached the third heating unit 14 is heated by heat exchange in the third heating unit 14 with the combustion gas CG (e.g., 200°C to 350°C) flowing in the gas line GL2 (e.g., heated to 150°C to 300°C). This allows the heated cathode gas to be supplied to the fuel cell 6. Preheating the cathode gas with the heat of the combustion gas CG can increase the efficiency of heat utilization in the power generation system 1. Therefore, it is possible to improve the power generation efficiency in the power generation system 1. The third heating unit 14 is arranged downstream of the second heating unit 12 in the flow of the combustion gas CG. Therefore, the third heating unit 14 heats the cathode gas using the combustion gas CG that has been used in the second heating unit 12.

The outlet of the anode electrode 6a is connected to the combustion unit 8 by a gas line GL4. An off-gas OG that has passed through the anode electrode 6a without being used for power generation is sent to the combustion unit 8 through the gas line GL4. The outlet of the cathode electrode 6b is connected to the combustion unit 8 by a gas line GL6. An off-gas OG that has passed through the cathode electrode 6b without being used for power generation is sent to the combustion unit 8 through the gas line GL6. Hereafter, as appropriate, the off-gas OG from the anode electrode 6a and the off-gas OG from the cathode electrode 6b are collectively referred to as an off-gas OG from the fuel cell 6.

The combustion unit 8 combusts the off-gas OG from the fuel cell 6 to generate a combustion gas CG (e.g., 750°C to 1000°C). A known catalytic combustor or a known combustor can be used for the combustion unit 8. The gas line GL2 is connected to the combustion unit 8. The combustion gas CG generated in the combustion unit 8 flows into the gas line GL2. As described above, the heat exchanger 20, the second heating unit 12, and the third heating unit 14 are connected to the gas line GL2 from the upstream side of the flow of the combustion gas CG. Therefore, the combustion gas CG flowing in the gas line GL2 first exchanges heat with the heat medium HC in the heat exchanger 20, then exchanges heat with the organic hydride in the second heating unit 12, then exchanges heat with the cathode gas in the third heating unit 14, and is then discharged from the system.

The ratio (O_{2_OUT}/O_{2_IN}) of the amount of oxygen (O_{2_OUT}) contained in the off-gas OG from the cathode electrode 6b to the amount of oxygen (O_{2_IN}) supplied to the cathode electrode 6b (hereafter this ratio is referred to as residual ratio U) is preferably 0.4 or more and more preferably 0.5 or more. The residual ratio U is preferably 0.7 or less and more preferably 0.65 or less. Most preferably, the residual ratio U is 0.6. Given that the ratio of the amount of oxygen consumed at the cathode electrode 6b to the amount of oxygen supplied to the cathode electrode 6b is denoted by Ua (hereafter this ratio is referred to as consumption ratio Ua), the residual ratio U satisfies the following equation: U = 1 - Ua.

In the power generation system 1, known operating conditions that affect oxygen consumption at the cathode electrode 6b, such as the supply amount of cathode gas and the supply amount of the first gas component G1 (anode gas), are controlled such that the residual ratio U is in the above range. For example, control of the supply amount of the cathode gas and the supply amount of the anode gas can be achieved by adjusting the opening of valves (not shown) provided in the feedlines FL2 and FL10. Such control may be performed by a control device (not shown) provided in the power generation system 1 or performed manually by the user of the power generation system 1. The control device as an example comprises a processor (hardware), such as a central processing unit (CPU), a micro processing unit (MPU), or a microcontroller, in combination with a software program executed by the processor.

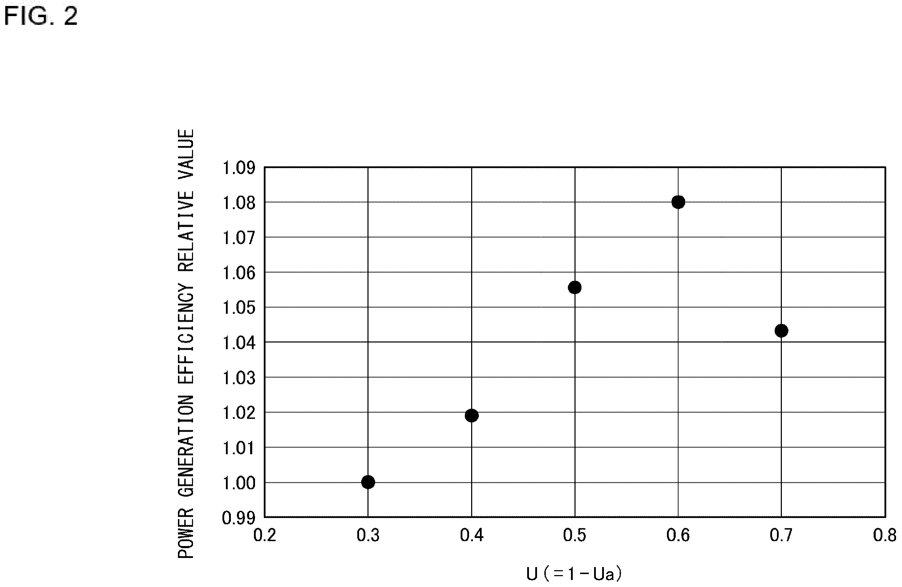

The inventors of the present invention calculated the power generation efficiency at each residual ratio U of the power generation system 1 while varying the residual ratio U within a range of 0.3 to 0.7. Further, the relative value of the power generation efficiency at each residual ratio U was calculated based on the power generation efficiency obtained when the residual ratio U was 0.3. The results are shown in Fig. 2. Fig. 2 is a diagram showing the relationship between the residual ratio U and the relative value of the power generation efficiency.

As shown in Fig. 2, it has been confirmed that the power generation efficiency in the power generation system 1 improves when the residual ratio U is 0.4 or more. It has also been confirmed that the power generation efficiency improves more when the residual ratio U is 0.7 or less, further improves when the residual ratio U is 0.5 or more, and is the highest when the residual ratio U is 0.6.

The reason why the power generation efficiency improves when the residual ratio U is in the above-mentioned range is as follows. That is, if the residual ratio U is high, in other words, if the consumption ratio Ua is low, this means that the amount of cathode gas that must be supplied to the cathode electrode 6b is large. In this case, the amount of heat required to heat the cathode gas increases. Therefore, the power generation efficiency of the power generation system 1 decreases due to the need to secure heat for heating the cathode gas.

On the other hand, if the residual ratio U is low, in other words, if the consumption ratio Ua is high, the amount of cathode gas that must be supplied to the cathode electrode 6b is small. Therefore, the amount of heat required to heat the cathode gas is reduced. On the other hand, since the amount of the off-gas OG discharged from the cathode electrode 6b is reduced, the amount of the combustion gas CG produced is reduced. As a result, the heat required to heat the dehydrogenation reaction unit 2, the organic hydride, and the cathode gas is insufficient, and the power generation efficiency of the power generation system 1 decreases.

For the above reasons, controlling the operation of the power generation system 1 such that the residual ratio U is preferably 0.4 or more can further improve the power generation efficiency in the power generation system 1. As an example, the residual ratio U is preferably between 0.4 and 0.7, inclusive, more preferably between 0.5 and 0.65, inclusive, and most preferably 0.6.

The feedlines FL2 to FL10, the recycle lines RL, and the gas lines GL2 to GL6 can be constituted by known pipes, etc., respectively. The power generation system 1 may also have a known gas turbine that generates electricity using the combustion gas CG obtained after being used in the third heating unit 14. When power generation using renewable energy is combined with the power generation system 1, or when the power generation system 1 receives supply of an organic hydride generated by the electricity from the power generation using renewable energy, the power generation system 1 may be able to adjust the amount of electricity generated in the power generation in the fuel cell 6 in accordance with fluctuations in the amount of electricity generated in the power generation using renewable energy.

The present invention may be defined by the items described in the following.

### [Item 1]

A power generation system (1) including:
a dehydrogenation reaction unit (2) that produces hydrogen and a dehydrogenation product from an organic hydride;
a first hydrogen purification unit (4) that separates at least a first gas component (G1) and a second gas component (G2) from an effluent (E) from the dehydrogenation reaction unit (2), the first gas component (G1) containing the hydrogen in a larger amount than that in the second gas component (G2) and the second gas component (G2) containing the gaseous dehydrogenation product and the gaseous organic hydride in a larger amount than those in the first gas component (G1);
a fuel cell (6) that receives supply of the first gas component (G1) so as to generate electricity;
a recycle line (RL) that supplies the second gas component (G2) to the dehydrogenation reaction unit (2);
a combustion unit (8) that combusts an off-gas (OG) from the fuel cell (6) so as to generate a combustion gas (CG);
a first heating unit (10) that heats the dehydrogenation reaction unit (2) using the combustion gas (CG); and
a second heating unit (12) that heats the organic hydride supplied to the dehydrogenation reaction unit (2) using the combustion gas (CG),
wherein the second heating unit (12) is located on the downstream side of the first heating unit (10) in a flow path (GL2) of the combustion gas (CG).

### [Item 2]

The power generation system (1) according to Item 1,
wherein the first hydrogen purification unit (4) has:
a gas-liquid separation unit (22) and a hydrogen separation membrane (24), or
the gas-liquid separation unit (22) and a TSA separation unit,
wherein the gas-liquid separation unit (22) separates a liquid component (L) and a gas component (G0) from the effluent (E) from the dehydrogenation reaction unit (2), the liquid component (L) containing liquid dehydrogenation products and liquid organic hydrides in a larger amount than those in the gas component (G0) and the gas component (G0) containing first gas components (G1) and second gas components (G2) in a larger amount than those in the liquid component (L), and
wherein the hydrogen separation membrane (24) and the TSA separation unit separates the first gas component (G1) and the second gas component (G2) from the gas component (G0).

### [Item 3]

The power generation system (1) according to Item 1 or Item 2,
wherein the first heating unit (10) has a heat medium (HC) that receives supply of heat from the combustion gas (CG) and supplies the heat to the dehydrogenation reaction unit (2).

### [Item 4]

The power generation system (1) according to any one of Item 1 through Item 3, further including:
a third heating unit (14) that heats a cathode gas that contains oxygen and is supplied to the fuel cell (6) using the combustion gas (CG) obtained after being used in the second heating unit (12).

### [Item 5]

The power generation system (1) according to any one of Item 1 through Item 4,
wherein the fuel cell (6) has an anode electrode (6a) to which the first gas component (G1) is supplied and a cathode electrode (6b) to which a cathode gas containing oxygen is supplied, and
wherein the ratio (U) (O_{2_OUT}/O_{2_IN}) of the amount of oxygen (O_{2_OUT}) contained in an off-gas (OG) from the cathode electrode (6b) to the amount of oxygen (O_{2_IN}) supplied to the cathode electrode (6b) is 0.4 or more.

### [Item 6]

The power generation system (1) according to any one of Item 1 through Item 5, further including:
a second hydrogen purification unit (18) that is located upstream of the fuel cell (6) and performs hydrogenolysis or steam reforming on at least one of the dehydrogenation product and organic hydride contained in the first gas component (G1).

### [Item 7]

The power generation system (1) according to any one of Item 1 through Item 6, further including:
an adding unit that is located upstream of the fuel cell (6) and adds water to the first gas component (G1).

### [Item 8]

A power generation method including:
producing hydrogen and a dehydrogenation product from an organic hydride;
separating at least a first gas component (G1) and a second gas component (G2) from an effluent (E) in the producing hydrogen and a dehydrogenation product, the first gas component (G1) containing the hydrogen in a larger amount than that in the second gas component (G2) and the second gas component (G2) containing the gaseous dehydrogenation product and the gaseous organic hydride in a larger amount than those in the first gas component (G1);
supplying the first gas component (G1) to a fuel cell (6) so as to generate electricity in the fuel cell (6);
supplying the second gas component (G2) to the producing hydrogen and a dehydrogenation product;
combusting an off-gas (OG) from the fuel cell (6) so as to generate a combustion gas (CG);
supplying heat of the combustion gas (CG) to the producing hydrogen and a dehydrogenation product; and
heating the organic hydride supplied to the producing hydrogen and a dehydrogenation product using the combustion gas (CG) obtained after being used in the supplying heat of the combustion gas (CG).

### [Item 9]

The power generation method according to Item 8, including:
performing at least one of power generation using renewable energy and production of an organic hydride using electricity from the power generation; and
controlling the amount of electricity generated in the fuel cell (6) in accordance with fluctuations in the amount of electricity generated in the power generation using renewable energy.

### INDUSTRIAL APPLICABILITY

The present invention can be used for a power generation system and a power generation method.

### REFERENCE SIGNS LIST

1 power generation system, 2 dehydrogenation reaction unit, 4 first hydrogen purification unit, 6 fuel cell, 6a anode electrode, 6b cathode electrode, 8 combustion unit, 10 first heating unit, 12 second heating unit, 14 third heating unit, 18 second hydrogen purification unit, 22 gas-liquid separation unit, 24 hydrogen separation membrane

## Claims

1. A power generation system comprising:
a dehydrogenation reaction unit that produces hydrogen and a dehydrogenation product from an organic hydride;
a first hydrogen purification unit that separates at least a first gas component and a second gas component from an effluent from the dehydrogenation reaction unit, the first gas component containing the hydrogen in a larger amount than that in the second gas component and the second gas component containing the gaseous dehydrogenation product and the gaseous organic hydride in a larger amount than those in the first gas component;
a fuel cell that receives supply of the first gas component so as to generate electricity;
a recycle line that supplies the second gas component to the dehydrogenation reaction unit;
a combustion unit that combusts an off-gas from the fuel cell so as to generate a combustion gas;
a first heating unit that heats the dehydrogenation reaction unit using the combustion gas; and
a second heating unit that heats the organic hydride supplied to the dehydrogenation reaction unit using the combustion gas,
wherein the second heating unit is located on the downstream side of the first heating unit in a flow path of the combustion gas.

2. The power generation system according to Claim 1,
wherein the first hydrogen purification unit has:
a gas-liquid separation unit and a hydrogen separation membrane, or
the gas-liquid separation unit and a TSA separation unit,
wherein the gas-liquid separation unit separates a liquid component and a gas component from the effluent from the dehydrogenation reaction unit, the liquid component containing liquid dehydrogenation products and liquid organic hydrides in a larger amount than those in the gas component and the gas component containing first gas components and second gas components in a larger amount than those in the liquid component, and
wherein the hydrogen separation membrane and the TSA separation unit separates the first gas component and the second gas component from the gas component.

3. The power generation system according to Claim 1 or Claim 2,
wherein the first heating unit has a heat medium that receives supply of heat from the combustion gas and supplies the heat to the dehydrogenation reaction unit.

4. The power generation system according to Claim 1 or Claim 2, further comprising:
a third heating unit that heats a cathode gas that contains oxygen and is supplied to the fuel cell using the combustion gas obtained after being used in the second heating unit.

5. The power generation system according to Claim 1 or Claim 2,
wherein the fuel cell has an anode electrode to which the first gas component is supplied and a cathode electrode to which a cathode gas containing oxygen is supplied, and
wherein the ratio (O_{2_OUT/}O_{2_IN}) of the amount of oxygen (O_{2_OUT}) contained in an off-gas from the cathode electrode to the amount of oxygen (O_{2_IN}) supplied to the cathode electrode is 0.4 or more.

6. The power generation system according to Claim 1 or Claim 2, further comprising:
a second hydrogen purification unit that is located upstream of the fuel cell and performs hydrogenolysis or steam reforming on at least one of the dehydrogenation product and organic hydride contained in the first gas component.

7. The power generation system according to Claim 1 or Claim 2, further comprising:
an adding unit that is located upstream of the fuel cell and adds water to the first gas component.

8. A power generation method comprising:
producing hydrogen and a dehydrogenation product from an organic hydride;
separating at least a first gas component and a second gas component from an effluent in the producing hydrogen and a dehydrogenation product, the first gas component containing the hydrogen in a larger amount than that in the second gas component and the second gas component containing the gaseous dehydrogenation product and the gaseous organic hydride in a larger amount than those in the first gas component;
supplying the first gas component to a fuel cell so as to generate electricity in the fuel cell;
supplying the second gas component to the producing hydrogen and a dehydrogenation product;
combusting an off-gas from the fuel cell so as to generate a combustion gas;
supplying heat of the combustion gas to the producing hydrogen and a dehydrogenation product; and
heating the organic hydride supplied to the producing hydrogen and a dehydrogenation product using the combustion gas obtained after being used in the supplying heat of the combustion gas.

9. The power generation method according to Claim 8, comprising:
performing at least one of power generation using renewable energy and production of an organic hydride using electricity from the power generation; and
controlling the amount of electricity generated in the fuel cell in accordance with fluctuations in the amount of electricity generated in the power generation using renewable energy.
